## Europäisches Patentamt

## European Patent Office

## Office européen des brevets

(11) Veröffentlichungsnummer: **0 034 755**
**B1**

(12) # EUROPÄISCHE PATENTSCHRIFT

(45) Veröffentlichungstag der Patentschrift:
**20.06.84**

(21) Anmeldenummer: **81100951.3**

(22) Anmeldetag: **11.02.81**

(51) Int. Cl.³: **G 07 C 11/00,** G 06 K 19/06

(54) **Berechtigungskarte.**

(30) Priorität: **14.02.80 DE 3005432**
**13.10.80 DE 8027321 U**

(43) Veröffentlichungstag der Anmeldung:
**02.09.81 Patentblatt 81/35**

(45) Bekanntmachung des Hinweises auf die Patenterteilung:
**20.06.84 Patentblatt 84/25**

(84) Benannte Vertragsstaaten:
**DE FR NL**

(56) Entgegenhaltungen:
**US - A - 3 399 473**
**US - A - 3 458 671**
**US - A - 3 504 343**
**US - A - 3 641 316**
**US - A - 3 762 081**
**US - A - 4 038 637**

㉛ ·Patentinhaber: **Stockburger, Hermann, Kirnachweg 7,
D-7742 St. Georgen (DE)**
Patentinhaber: **Winderlich, Hans-Georg, Niedere
Strasse 36, D-7730 Villingen (DE)**

(72) Erfinder: **Stockburger, Hermann, Kirnachweg 7,
D-7742 St. Georgen (DE)**
Erfinder: **Winderlich, Hans-Georg, Niedere Strasse 36,
D-7730 Villingen (DE)**

(74) Vertreter: **Prüfer, Lutz H., Dipl.-Phys.,
Willroiderstrasse 8, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Berechtigungskarte, bestehend aus einem als Datenträger dienenden Kartenkörper und einem vom Benutzer einstellbaren Element zum Erzeugen einer der Identifizierung und/oder Berechtigungsprüfung dienenden Information.

Eine derartige Berechtigungskarte ist aus der US-PS 33 99 473 bekannt. Die Berechtigungskarte ist mehrschichtig ausgebildet und weist einen elektrischen Leiterkreis auf, der mittels in der mehrschichtigen Karte angeordneter verstellbarer Schalter bei einer bestimmten Stellung der Schalter geschlossen ist. Der Aufbau einer solchen mehrschichtigen Karte mit einem verdeckten elektrischen Leiterkreis und elektrischen Schaltern ist kompliziert. Darüber hinaus ist die «richtige» Einstellung der elektrischen Schalter durch deren Aufbau selbst bestimmt. Ein Dritter kann durchaus probieren, die richtige Einstellkombination der Schalter zu ermitteln, so dass die Karte nicht gegen Missbrauch geschützt ist. Es ist auch bekannt, die Auswertegeräte für eine solche Berechtigungskarte mit einer zusätzlichen Eingabetastatur zu versehen, in die der Inhaber der Scheckkarte eine Kennzahl eingeben muss, die mit auf der Karte gespeicherten Informationen verglichen wird. Dabei besteht aber die Gefahr, dass das Eingeben der Kennzahl von Dritten beobachtet und somit die Kennzahl für Dritte bekannt wird.

Aus der US-PS 37 62 081 ist eine Kreditkarte bekannt, die eine Anzahl von Schlitzen aufweist, durch die Einstellelemente hindurchgehen und in denen diese verschiebbar sind. Die Einstellelemente sind jeweils fest mit der Berechtigungskarte selbst verbunden.

Aus der US-PS 35 04 343 ist eine mehrschichtig ausgebildete Berechtigungskarte mit Einstellelementen, durch deren Einstellung sich die Wirkung eines in der Karte vorgesehen elektrischen Schaltkreises ändert, bekannt. Wie bei der zuerst beschriebenen bekannten Ausführungsform ist auch hier der Aufbau der Berechtigungskarte kompliziert.

Aufgabe der Erfindung ist es, die Berechtigungskarte so auszubilden, dass bei gleicher Sicherheit der eigentliche Datenträger billiger herstellbar ist.

Diese Aufgabe wird durch eine Berechtigungskarte der oben beschriebenen Art gelöst, die gemäss der Erfindung dadurch gekennzeichnet ist, dass der Kartenkörper und das einstellbare Element als voneinander trennbare Teile ausgebildet sind, von denen das einstellbare Element wiederverwendbar ist. Durch die erfindungsgemässe Lösung ergibt sich der Vorteil, dass das teure Identifikationselement mehrfach verwendbar ist.

Weitere Merkmale der Erfindung sind in den Unteransprüchen gekennzeichnet.

Die Berechtigungskarte ist mit einer Art Zahlenschloss versehen. In demjenigen Bereich des Kartenkörpers dem die Kennzeichnungsinformation entnommen wird, befindet sich ein spezieller Teil des einstellbaren Elementes. Die Berechtigungskarte wird nur dann als echt anerkannt, wenn der im Kennungsbereich liegende Teil des Elementes das jenige Muster aufweist, dessen inhärente Kennzeichnungsinformation in kodierter Form auf der Aufzeichnungsspur enthalten ist. Wenn beispielsweise das Element zehn verschiedene Stellungen einnehmen kann, ist nur in einer dieser Stellungen das auf dem Element befindliche Muster in der «richtigen» Position, in der Identität der Kennzeichnungsinformation mit der auf der Aufzeichnungsspur enthaltenen Information festgestellt wird. Das Muster auf dem Element kann aus Schriftzeichen oder aus einer flächigen oder plastischen Struktur bestehen. Durch Wählen einer bestimmten Stellung des Elementes in der Berechtigungskarte und anschliessende Abtastung des Kennungsbereiches wird die Kennzeichnungsinformation erzeugt. Die Kennzeichnungsinformation kann entweder an einem oder mehreren Punkten oder entlang einer Linie der Berechtigungskarte abgelesen werden. Beispielsweise kann durch Lesen bzw. Abtasten entlang einer den Kennungsbereich überstreichenden Linie ein fortlaufendes Kennzeichnungsprotokoll erstellt werden, das mit einem auf einer Protokollspur des Kartenkörpers enthaltenen Echtheits-protokoll übereinstimmen muss, um die Berechtigungskarte samt der Einstellung eines oder mehrerer bewegbarer Elemente als echt festzustellen. Vorzugsweise sind wie bei einem Zahlenschloss als Element mehrere Platten vorgesehen, von denen sich jede in einen ihr zugeordneten Kennungsbereich erstreckt. Zur Festlegung der Positionen der Platten kann jeder Platte eine Skala zugeordnet sein, so dass der Benutzer eine Zahlenkombination einstellt, um die Berechtigungskarte in den Echtheitszustand zu bringen.

Im folgenden werden Ausführungsbeispiele der Erfindung unter Bezugnahme auf die Figuren näher erläutert:

Es zeigen:

Fig. 1 eine perspektivische Ansicht einer Berechtigungskarte;

Fig. 1a einen bei der Karte in Figur 1 gezeigten Schieber im Detail;

Fig. 2 eine Draufsicht von unten auf eine abgewandelte Ausführungsform der Erfindung;

Fig. 3 einen Schnitt entlang der Linie III-III in Fig. 2;

Fig. 4 ein Detail der in den Figuren 2 und 3 gezeigten Vorrichtung in vorgrössertem Massstab in Ansicht von unten;

Fig. 5 einen Schnitt entlang der Linie V-V in Fig. 4;

Fig. 6 eine perspektivische Ansicht einer teilweise weggebrochen dargestellten Vorrichtung zum Betreiben der Berechtigungskarte;

Fig. 7 einen Ausschnitt aus der Vorrichtung in Figur 6;

Fig. 8 einen Schnitt entlang der Linie X-X in Fig. 6;

Fig. 9 eine Draufsicht auf eine Berechtigungskarte, die auswechselbar in einen Rahmen eingesetzt ist;

Fig. 10 einen Schnitt entlang der Linie XII-XII der Figur 11;

Fig. 11 eine Ansicht der Berechtigungskarte gemäss Figur 9 von unten her gesehen;

Fig. 12 eine Draufsicht der Berechtigungskarte nach den Figuren 9 bis 11;

Fig. 13 eine Berechtigungskarte mit mehreren verschiebbaren Streifen;

Fig. 14 einen Schnitt entlang der Linie XVI-XVI von Figur 13;

Fig. 15 eine Berechtigungskarte mit in einem Rahmen verschiebbaren Platten;

Fig. 16 eine Ansicht der Berechtigungskarte der Figur 15 von unten und

Fig. 17 eine Berechtigungskarte für die Ausführungsform nach den Figuren 15 und 16.

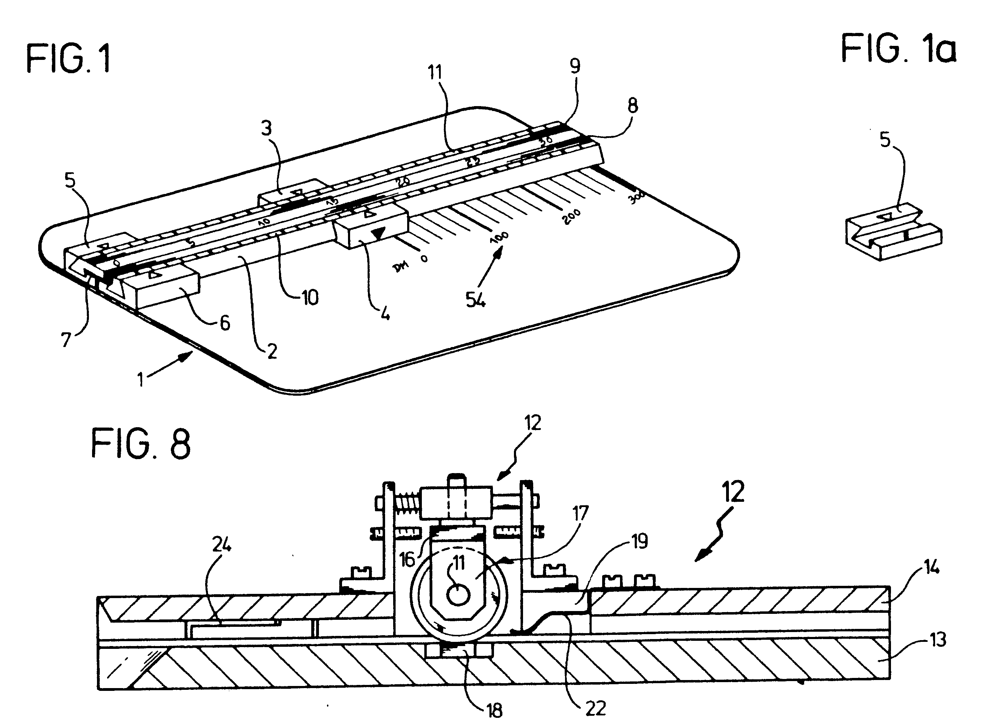

Bei der in Figur 1 gezeigten Ausführungsform der Berechtigungskarte ist auf einen als Datenträger dienenden Kartenkörper 1 im Form eines aufgesetzten Bügels 2 mit auf diesem gleitenden Schiebern 3, 4, 5, 6 ein einstellbares Element zum Erzeugen einer der Identifizierung und/oder Berechtigungsprüfung dienenden Information aufgebracht. Der Schieber weist auf seiner Unterseite eine sich über seine gesamte Länge erstreckende Widerstandsbahn 7 auf. Das sichtbare Ende der Widerstandsbahn 7 ist mit einer sich auf der Oberseite des Schiebers erstreckenden Leitungsbahn 8 leitungsmässig verbunden, und das entgegengesetzte Ende der Widerstandsbahn 7 ist mit einer zweiten sich auf der Oberseite des Schiebers erstreckenden Leitungsbahn 9 leitungsmässig verbunden. Der Bügel 2 ist in geeigneter Weise mit dem Kartenkörper 1 verbunden. Beispielsweise kann er den Kartenkörper 1 seitlich umfassen, oder aber er kann auf seiner Unterseite hervorstehende Ansätze aufweisen, in die der Kartenkörper 1 mit Ausnehmungen so eingreift, dass er auf Zug beansprucht aufgespannt wird. Die Widerstandsbahn 7 hat über ihre Längsrichtung eine nichtlineare aber stetig sich ändernde Charakteristik, so dass jeder Stelle der Bahn eindeutig ein und nur ein Spannungswert zugeordnet ist.

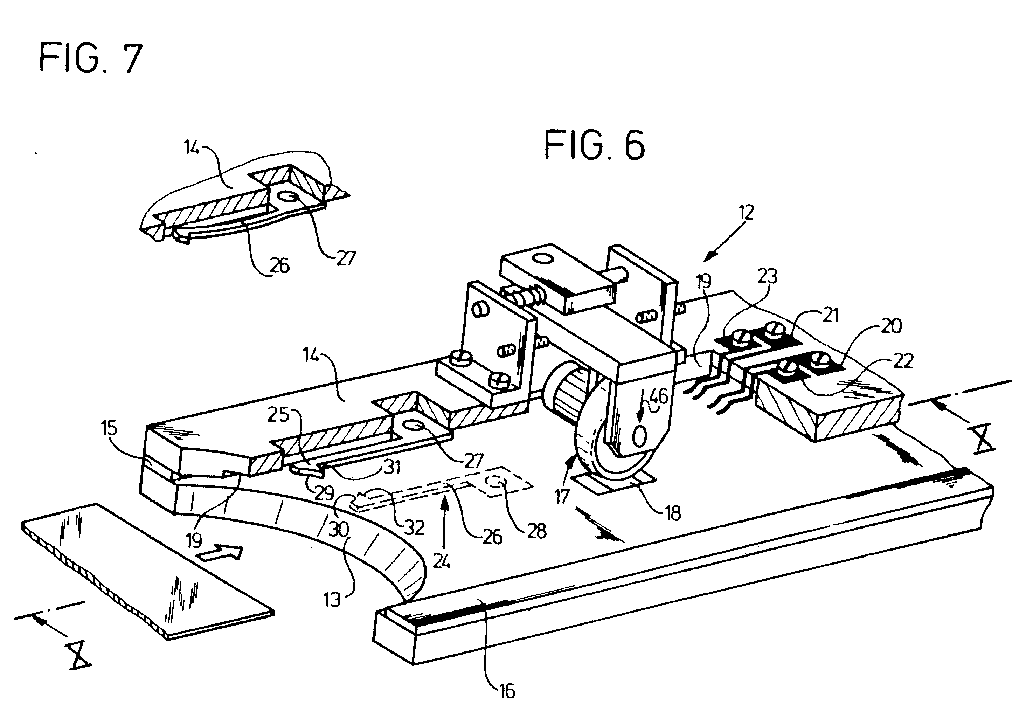

Das Verarbeiten der Berechtigungskarte erfolgt in einer in den Figuren 6 bis 8 gezeigten Station 12. Diese umfasst eine Grundplatte 13 und eine Deckplatte 14. Die Deckplatte wird durch seitlich vorgesehene Leisten 15, 16 in einem vorgesehenen Abstand zur Grundplatte gehalten. Ferner ist ein Magnetkopf 18 zum Auslesen bzw. Einschreiben von in einer Magnetspur eingezeichneten bzw. einzuschreibenden Daten vorgesehen. Die zunächst teilweise in den Schlitz eingeschobene Berechtigungskarte wird mittels der Karteneinzugsvorrichtung 17 so bewegt, dass der Magnetkopf die gesamte Magnetspur auslesen bzw. in diese einschreiben kann.

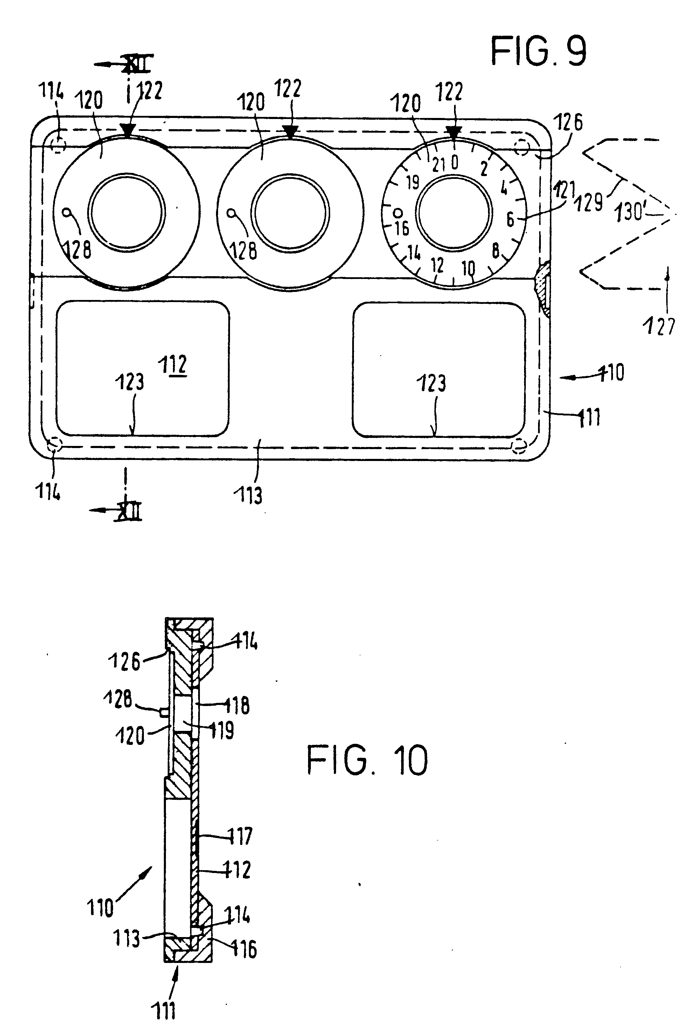

Wie am besten aus den Figuren 6 und 8 ersichtlich ist, ist in der Deckplatte 14 eine zum Kartenschlitz hin offene kanalförmige Ausnehmung 19 vorgesehen, die sich über die gesamte Länge der Deckplatte parallel zur Bewegungsrichtung der Berechtigungskarte erstreckt und deren Abmessungen so gewählt sind, dass der Bügel 2 mit den Schiebern 3 bis 6 beim Hindurchbewegen der Berechtigungskarte durch die Station durch die Ausnehmung hindurchbewegbar sind. An der Deckplatte 14 in die Ausnehmung 19 hineinreichende Schleifkontakte 20, 21, 22, 23 vorgesehen, die seitlich gegeneinander so versetzt sind und soweit in den Schlitz zwischen Deckplatte und Grundplatte hineinreichen, dass beim Hineinschieben der oben beschriebenen Berechtigungskarte der Schleifkontakt 20 mit der Leitungsbahn 8, der Schleifkontakt 21 mit der zweiten Leitungsbahn 9 in Verbindung steht und die Schleifkontakte 22 und 23 mit den Schiebern 4, 6 und 3, 5 in Eingriff gelangen, sobald diese in Abhängigkeit von ihrer Einstellung unter dem entsprechenden Schleifkontakt hindurchgeführt werden. Die Schieber 3, 4, 5 und 6 sind vorzugsweise aus Kunststoff gebildet und mit einem gutleitenden metallischen Überzug versehen. Die Schleifkontakte 20, 21 sind mit einer Spannungsquelle verbunden, über die die Gesamtspannung an die Widerstandsbahn 7 angelegt wird. die Schleifkontakte 22, 23 sind jeweils so mit einem Spannungsmesser verbunden, dass für jede Einstellung eines Schiebers nach dem Prinzip des Spannungsteilers ein Widerstandswert bzw. Spannungsteilerverhältnis gemessen wird. Der Benutzer stellt nun vor der Benutzung eine für seine Person charakteristische von ihm gewählte oder ihm zugeteilte PIN-Einstellung der Schieber (Zahl und/oder Buchstabe) auf dem Bügel ein. Beim Aktivieren der Karte werden beim Hindurchfahren der Berechtigungskarte durch die Station die der Einstellung entsprechenden Spannungsverhältnisse ermittelt und aus diesen über eine nichtgezeigte Datenverarbeitungseinrichtung Binärcodeinformationen gebildet. Diese werden neben den Informationen über die mit dere Berechtigungskarte geltend machbare Berechtigung und sonstige einzuschreibende Informationen als Zusatzinformation in einen Magnetstreifen der Berechtigungskarte eingeschrieben. Bei der späteren Benutzung der Berechtigungskarte stellt der Benutzer mit den Schiebern wiederum die für ihn charakteristische PIN-Kombination (Zahl oder Buchstaben) ein. Beim Hindurchführen der Berechtigungskarte durch die Station werden wiederum die durch die Einstellung gegebenen charakteristischen Spannungsverhältnisse ermittelt und daraus Binärcodeinformationen gebildet. In der nichtgezeigten Datenverarbeitungseinrichtung werden diese Binärcodeinformationen dann mit den entsprechenden aus der Magnetspur ausgelesenen Binärcodeinformationen verglichen. Stimmen die Informationen überein, so wird davon ausgegangen, dass der Benutzer der berechtigte Inhaber der Karte ist. Bei einer Abweichung zeigt die Station an, dass eine Berechtigung nicht gegeben ist.

Damit die für den Benutzer charakteristische persönliche Gedächtniszahl PIN nach Benutzung der Berechtigungskarte nicht von Dritten erkennbar ist, weist die Station eine Rückstellvorrichtung 24 auf. Diese ist am besten in Fugur 6 zu erkennen. Dabei handelt es sich um zwei Rückstellklinken 25, 26, die um in der Deckplatte 14 befestigte zur Schlitzrichtung senkrechte Achsen 27, 28 schwenkbar sind. Die Rückstellklinken sind so federnd vorgespannt, dass sie mit ihren Klauen an dem Schieber anliegen. Ihre Klinkenenden weisen zur Öffnung hin abgeschrägte Flächen 29, 30 auf. Beim Einführen der Berechtigungskarte werden durch die abgeschrägten Flächen 29, 30 die Rückstellklinken durch die Schieber 3 bis 6 so nach aussen gedrückt, dass die Schieber vorbeigleiten können. Beim Zurückbewegen der Berechtigungskarte in entgegengesetzter Richtung dagegen, greifen die Rückstellklinken 25, 26 mit ihren Greifflächen 31, 32 an den Schiebern 3 bis 6 an und ziehen diese bis zu einem Anschlag in Figur 1 nach rechts zurück. Die Rückstellklinken sind aus einem federnd nachgebenden Material wie beispielsweise Kunststoff hergestellt. Durch die Elastizität biegen sich die Schenkel in der in Figur 7 gezeigten

*Weise etwas nach aussen, sobald die Schieber an* den Anschlag zurückgestellt sind und sich die auf die Klinken wirkende Kraft vergrössert. Die Rückstellklinken biegen sich schliesslich soweit nach aussen, dass der Eingriff mit den Schiebern gelöst und die Berechtigungskarte herausgenommen werden kann.

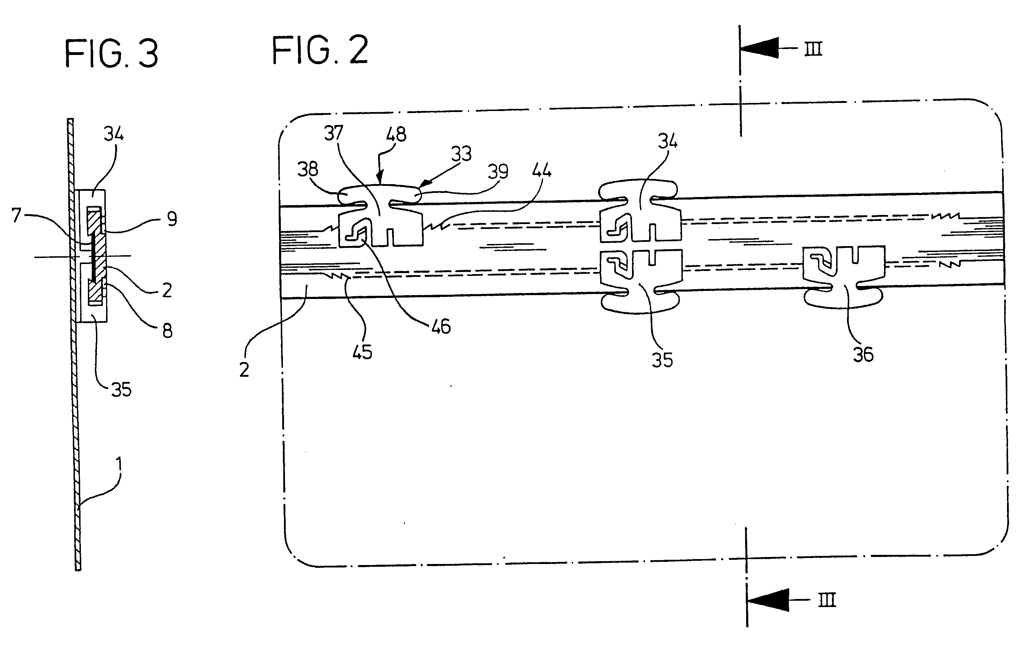

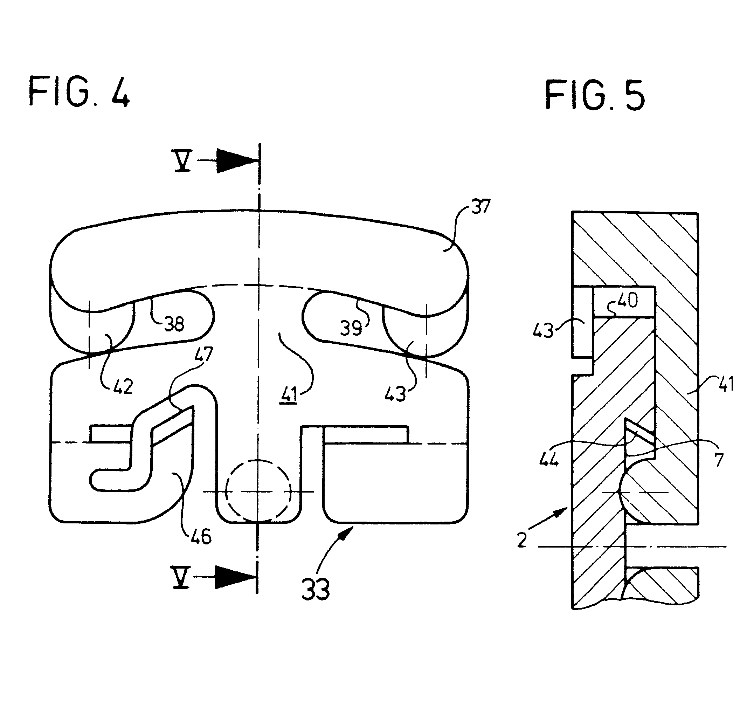

Die in den Figuren 2 und 3 gezeigte Ausführungsform stimmt im wesentlichen mit der oben beschriebenen Ausführungsform der Berechtigungskarte überein. Lediglich die Schieber 33, 34, 35, 36, die in Figur 2 von unten zu sehen sind (der eigentliche Kartenkörper ist nur schematisch angedeutet, und Figur 2 zeigt eine Draufsicht auf Bügel 2 und die zugehörigen Schieber) unterscheiden sich gegenüber den in den Figuren 1 und 1a gezeigten Schiebern dadurch, dass sie so ausgebildet sind, dass sie mit dem Schieber eine einrastende Verbindung bilden können. In Figur 4 ist eine Draufsicht von unten und in Figur 5 eine Seitenschnittansicht gezeigt. Der Schieber 33 weist einen bogenförmig ausgebildeten Wandbereich 37 auf, der mit seinen nach innen gerichteten Schenkeln 38, 39 an der Aussenkante 40 des Bügels anliegt. Wie am besten aus Figur 5 ersichtlich ist, liegt der Schieber mit seinem Basisteil 45 an der Unterseite des Bügels 2 an. Auf seiner dem Basisteil gegenüberliegenden Seite sind an jedem Schenkel Führungsteile 42, 43 vorgesehen, die auf der Oberseite des Bügels 2 anliegen. Unterhalb der Widerstandsbahn 7 auf dem Bügel 2 und zu dieser gerichtet weist das Basisteil an seinem Ende eine palettenförmige Ausbuchtung auf, die beim Bewegen des Schiebers an der Widerstandsbahn entlanggleitet. Der Bügel 2 weist auf seiner Unterseite über seine gesamte Länge Rastzähne 44, 45 (siehe Figur 2) auf. Der Schieber 33 besitzt an seinem einen Ende des Basisteils einen federnd nachgebend ausgebildeten Arm 46, der so ausgebildet und angeordnet ist, dass er mit den Rastzähnen in Eingriff gelangt. Das mit den Rastzähnen in Eingriff gelangende Ende 47 des Armes ist so angeschrägt, dass die Rastverbindung zwischen Schieber und Rastzähnen in der in den Figuren 2 und 4 gezeigten Stellung bei einer Bewegung des Schiebers zwar nach links, nicht aber nach rechts lösbar ist. Zum Einstellen drückt der Benutzer in Richtung des Pfeiles 48 (siehe Figur 2) auf den Wandbereich 37, wobei die elastisch ausgebildeten Schenkel 38, 39 etwas nachgeben, so dass die Rastverbindung zwischen Arm 46 und den Rastzähnen gelöst wird und der Schieber in beiden Richtungen zum Einstellen auf den PIN bewegbar ist. In der vorgegebenen Stellung erfolgt die Einrastung. Die Karte wird nun so in die Station eingeschoben, dass die Schieber aufgrund der Arretierung in einer Richtung nicht durch die Rückstellklinken verschoben werden können. Beim Herausschieben dagegen können die Schieber aufgrund der abgeschrägten Enden 47 in die Nullstellung zurückgeschoben werden.

Bei der in den Figuren 2 bis 5 gezeigten Ausführungsform erfolgt der eigentliche Auswertevorgang in der gleichen Weise wie oben anhand des ersten Ausführungsbeispieles beschrieben. Insbesondere können beide Ausführungsformen der Berechtigungskarten in einer oben beschriebenen Station 12 ausgewertet werden.

Bei den oben beschriebenen Ausführungsbeispielen wurden alle Schieber zum Einstellen der den berechtigten Benutzer kennzeichnenden Gedächtniszahl (PIN) verwendet. Grundsätzlich ist es auch möglich, einen der Schieber oder einen zusätzlichen Schieber zum Eingeben von Transaktionsbefehlen an die Station zu verwenden. In dem in Figur 1 gezeigten Ausführungsbeispiel wird der Schieber 4 zum Eingeben solcher Transaktionsbefehle verwendet. Zu diesem Zweck ist auf der Karte eine Wertskala 54 vorgesehen. Mit dem Schieber 4 kann die Bedienungsperson auf der Wertskala 54 beispielsweise eine Abhebung eines bestimmten Betrages einstellen. Über den Schleifkontakt 22 wird der sich aus der Einstellung ergebende Widerstandswert ermittelt. Dieser wird über entsprechende Umsetzer in einen Binärcode umgewandelt, der eine entsprechende Geldausgabestation ansteuert.

Für die oben beschriebene Erfindung ist wesentlich, dass die Widerstandsbahnen 7 verschiedener Bügel nicht etwa gleich sondern nach einer Zufallsverteilung zueinander unterschiedlich ausgebildet sind. Ferner ist wichtig, dass mit der beschriebenen Messmethode nicht Widerstandswerte direkt sondern jeweils Spannungsteilerverhältnisse gemessen werden. Die an sich lineare sichtbare Skala wird dabei jeweils auf eine nichtlineare individuelle Charakteristik projiziert, so dass ein Benutzer selbst bei Erlangen einer persönlichen Gedächtniszahl mit dieser nicht etwa einen anderen Bügel einstellen kann, weil die Widerstandsbahn einen anderen Verlauf aufweist und somit die gleiche Einstellung zu einem anderen Informationsergebnis führt.

Die Berechtigungskarte 110 der Figuren 9 und 10 besteht aus einem relativ starren Kunststoffrahmen 111 und einem auswechselbar in dem Kunststoffrahmen 111 befestigten Datenträger 112 als Kartenkörper. Der rechteckige Kunststoffrahmen 111 ist zweiteilig ausgebildet. Er weist ein plattenförmiges Basisteil 113 auf, gegen dessen eine Flachseite der Datenträger 112 gelegt wird. Von dem Basisteil 113 stehen in der Nähe der Ecken Zapfen 114 ab, die durch Löcher 115 des Datenträgers 112 hindurchgehen. Das zweite Rahmenteil 116 übergreift teilweise das Basisteil 113, so dass beide Rahmenteile 113 und 116 in fester gegenseitiger Zuordnung gehalten werden, wobei die Zapfen 114 in entsprechende Löcher des zweiten Rahmenteiles 116 eindringen. Das zweite Rahmenteil 116 weist einen Rand mit L-förmigem Profil auf, dessen einer Schenkel den Rand des Datenträgers 112 überdeckt und gegen das Basisteil 113 drückt.

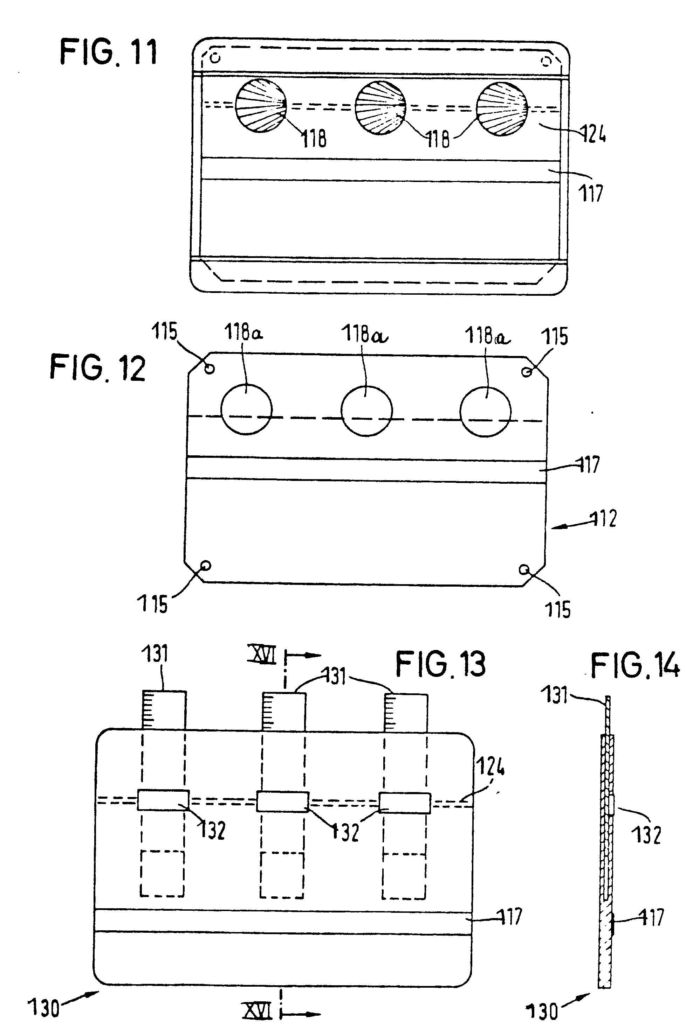

Der Datenträger 112, der in Figur 11 separat dargestellt ist, weist im wesentlichen rechteckige Form auf und besteht aus Papier oder Folie. Eine Aufzeichnungsspur 117, beispielsweise eine Magnetspur, erstreckt sich über die Länge des Datenträgers. Ausserdem weist der Datenträger 112 drei nebeneinander liegende runde Öffnungen 118a auf.

Wenn der Datenträger 112 in den Rahmen 111 eingespannt ist, sind die Löcher 115 mit den kreisförmigen Platten 118 ausgefüllt. Die kreisförmigen Platten 118 haben etwa die Stärke des Datenträgers 112. Ihre Aussenseite, die etwa in der Ebene der Aussenseite des Datenträgers 112 liegt, ist, wie Figur 11 zeigt, durch Striche, Linien, Magnetteilchen, plastische Verformung o. dgl. strukturiert, so dass sie maschinell abtastbar ist. Von der Rückseite einer jeden Platte 118 erstreckt sich ein Zylinder 119 durch eine Bohrung des Basisteiles 13 hindurch und an dem Zylinder 119 ist auf der der Platte 118 abgewandten Seite eine Scheibe 120 befestigt, die parallel zur Platte 118 verläuft. Durch Drehen der Scheibe 120 wird auch der Zylinder 119 und die zugehörige Platte 118 gedreht. Die Scheiben 120 befinden sich also auf der dem Datenträger 112 abgewandten Rückseite der Berechtigungskarte 110. Sie sind in Vertiefungen untergebracht, so dass sie nicht über die rückwärtige Fläche hinaus vorstehen. Jede Scheibe 120 weist eine Zahlenskala 121 auf, und an dem Basisteil 113 sind feste Markierungen 122 angebracht, auf die die gewünschten Ziffern der Skalen 121 angestellt werden können.

Ausserhalb des Bereichs der Scheiben 120 weist das Basisteil 113 rechteckige Löcher 123 auf, durch die hindurch Ausschnitte der Rückseite des Datenträgers 112 sichtbar sind.

Bei der Abtastung des Datenträgers wird die Berechtigungskarte 110 an zwei Tastköpfen entlang bewegt. Der erste Tastkopf tastet die Magnetspur 117 ab (Figur 11), und der zweite Tastkopf bewegt sich relativ zu der Berechtigungskarte 110 entlang einer Abtastspur 124, die parallel zur Magnetspur verläuft und über die Platten 118 hinweggeht. Je nach Drehstellung einer der Platten 118 gelangt also ein unterschiedliches Muster in den Bereich der Abtastspur 124. Auf der Magnetspur 117 sind spezielle Kenndaten aufgezeichnet, die denjenigen Daten entsprechen, die bei einer vorgegebenen, nur dem Inhaber der Karte bekannten Kombination von Dreheinstellungen der Platten 118 an einem Tastkopf entstehen, der relativ zu der Berechtigungskarte 110 entlang der Abtastspur 124 bewegt wird. Nur wenn eine bestimmte Kombination von Drehstellungen der Platten 118 eingestellt ist, wird also die Koinzidenz zwischen der durch die Drehstellung der Platten 118 gegebenen Kennzeichnungsinformation mit der auf der Magnetspur 117 aufgezeichneten Information hergestellt.

Wie die Figuren 9 und 10 zeigen, sind die Scheiben 120 innerhalb eines Kanales 126 an der Rückseite der Berechtigungskarte 110 versenkt angeordnet. Der Kanal 126 wird vor der Ausgabe der Berechtigungskarte aus einem Automaten über ein Führungsteil 127 geschoben, das sämtliche Scheiben 120 in eine neutrale Stellung bringt, bevor die Berechtigungskarte den Automaten verlässt. Um dies zu ermöglichen, stehen von den Scheiben 120 Stifte 128 ab, die über einen trichterförmigen Einführungsteil 129 in einen Führungsspalt 130' des Führungsteiles 127 eingeführt werden, wenn die Berechtigungskarte an dem Führungsteil 127 entlangbewegt wird. Auf diese Weise ist sichergestellt, dass die Platten sich in der Nullstellung befinden, wenn die Berechtigungskarte den Automaten verlässt.

Bei dem Ausführungsbeispiel der Figuren 13 und 14 weist die Berechtigungskarte 130 drei streifenförmige Schieber 131 auf, die in Schlitze, die von der einen Längskante aus sich in das Karteninnere erstrecken, unterschiedlich weit einschiebbar sind.

Im Bereich eines jeden Schlitzes ist an der Oberseite der Berechtigungskarte ein Fenster 132 vorgesehen, durch das hindurch der Streifen 131 sichtbar ist. Die Abtastspur 124 verläuft parallel zu der Magnetspur 117 und führt über die Fenster 132 hinweg.

Die Oberseiten der Streifen haben eine Strukturierung, die sich über die Streifenlänge verändert. In Abhängigkeit davon, wie weit ein Streifen 131 in den entsprechenden Schlitz der Berechtigungskarte eingesteckt ist, ergeben sich also im Bereich der Abtastspur 124 unterschiedliche Abtastergebnisse ab dem (nicht dargestellten) Tastkopf.

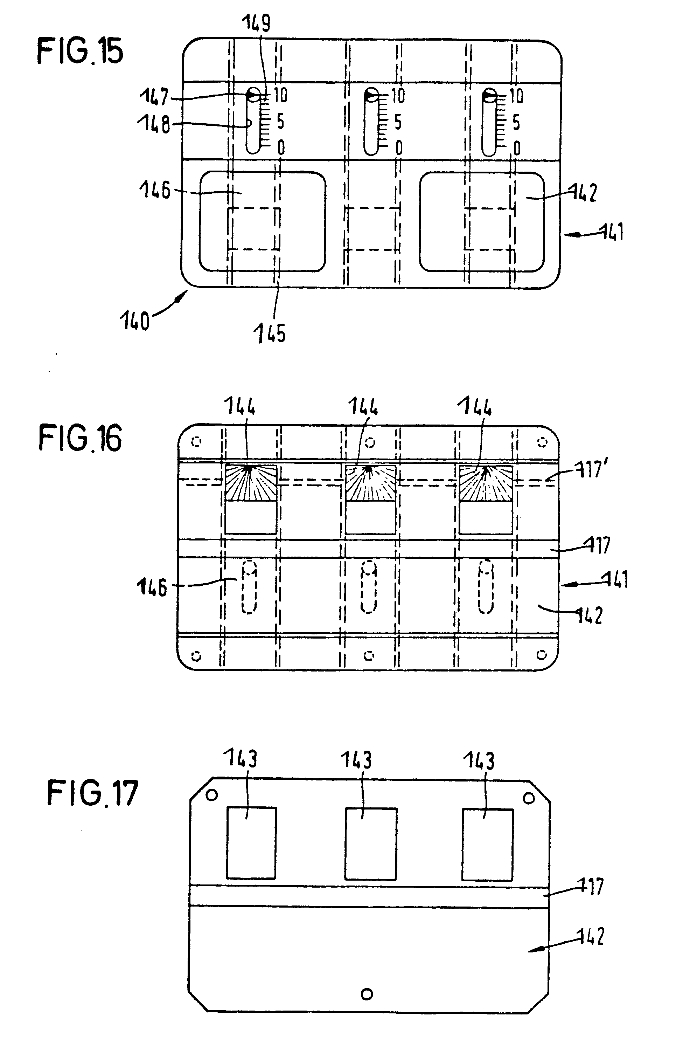

Bei dem Ausführungsbeispiel der Figuren 15 bis 17 weist die Berechtigungskarte 140 einen Rahmen 141 auf, in den ein Datenträger 142 eingesetzt ist. Der Datenträger 142 besitzt eine Magnetspur 117 und drei rechteckige Ausnehmungen 143 für die variablen Teilflächen. In den rechteckigen Ausnehmungen 143 sind Platten 144 verschiebbar, die Bestandteile des Rahmens darstellen und in dem Rahmen in Schwalbenschwanzführungen 145 die quer zur Magnetspur 117 verlaufen geführt werden. Die Platten 144, die in die Ausnehmungen 143 hineinragen, sind mit Führungsleinsten 146 versehen, die sich im Inneren des Rahmens befinden, und von denen zur rückwärtigen Rahmenseite hin Zapfen 147 abstehen, die in Schlitzen 148 und der Rahmenrückseite verschiebbar sind. Längs jeden Schlitzes 148 ist eine Skala 149 angebracht.

Wenn die strukturierten rechteckigen Platten 144 innerhalb der Ausnehmungen 143 des Datenträgers und entsprechender Ausnehmungen des Rahmens verschoben werden, verschieben sich die Leisten 146 mit, und das Mass der Verschiebung wird durch die Lage des Zapfens 147 an der Skala 149 angezeigt. Auf diese Weise können die Platten 144 auf verschiedene Positionen eingestellt werden, die an den Skalen 149 abgelesen werden können. In Abhängigkeit von der jeweiligen Position der Platte 144 gelangen unterschiedliche Bereiche der Platten in die Abtastspur 117', so dass beim Abtasten der Abtastspur 117' ein unterschiedlicher Signalverlauf entsteht.

In den oben beschriebenen Ausführungsbeispielen weisen die Berechtigungskarten als Speichermedium einen Magnetstreifen auf. die Erfindung ist aber auch mit Berechtigungskarten mit anderen Speichermedien wie Halbleiterspeichern anwendbar, insbesondere auch mit solchen, mit denen weitere logische Entscheidungen ausführbar sind.

**Patentansprüche**

1. Berechtigungskarte, bestehend aus einem als Datenträger dienenden Kartenkörper (1, 112, 130, 142) und einem vom Benutzer einstellbaren Element (2, 118, 131, 144) zum Erzeugen einer der Identifizierung und/oder Berechtigungsprüfung dienenden Information, dadurch gekennzeichnet, dass der Kartenkörper (1, 112, 130, 142) und das einstellbare Element (2, 118, 131, 144) als voneinander trennbare Teile ausgebildet sind, von denen das einstellbare Element (2, 118, 131, 144) wiederverwendbar ist.

2. Berechtigungskarte nach Anspruch 1, dadurch gekennzeichnet, dass das Element (2, 118, 131, 144) als ein auf den Kartenkörper (1, 112, 130, 142) aufsetzbares Teil mit wenigstens einem verschiebbaren Teil (3, 4; 33, 34, 35, 36; 120; 118; 144) ausgebildet ist, dessen Stellung zur Identifizierung abtastbar ist.

3. Berechtigungskarte nach Anspruch 1 oder 2, dadurch gekennzeichnet, dass ein eine Kennzeichnungsinformation aufweisender Kennungsbereich mit einer Abtastspur (124, 117') vorgesehen ist und dass das Element (112, 142) ein in die Abtastspur (124, 117') hineinragendes einstellbares Teil (118, 144) aufweist, dessen Einstellposition beim Abtasten unterschiedliche Informationen liefert.

4. Berechtigungskarte nach Anspruch 3, dadurch gekennzeichnet, dass das Teil (118, 144) ein flächenförmiges und/oder plastisches Muster aufweist, das in den möglichen Einstellpositionen des Bereiches unterschiedliche Informationen liefert.

5. Berechtigungskarte nach einem der Ansprüche 1 bis 4, dadurch gekennzeichnet, dass das Element als eine runde Scheibe (118), die um ihre Achse herum drehbar einstellbar ist, oder als eine entlang einer Bahn linear verschiebbare Platte (131, 144) ausgebildet ist.

6. Berechtigungskarte nach Anspruch 4 oder 5, dadurch gekennzeichnet, dass das Element (118, 144) an einem die Berechtigungskarte (112, 142) aufnehmenden Rahmen befestigt ist.

7. Berechtigungskarte nach einem der vorhergehenden Ansprüche, dadurch gekennzeichnet, dass das Element (2, 118, 131, 144) einen Mitnehmer (128) zum Zurückstellen in eine definierte Nullage aufweist.

8. Berechtigungskarte nach einem der Ansprüche 1 bis 7, dadurch gekennzeichnet, dass das Element (2, 118, 131, 144) eine Einstellmarkierung bzw. Einstellskala aufweist und die durch die Einstellung erzielbare Änderung nichtlinear und eindeutig mit der Einstellskala verknüpft ist.

9. Verfahren zum Prüfen der Berechtigung für eine Berechtigungskarte, dadurch gekennzeichnet, dass ein Kennwort auf der Berechtigungskarte eingestellt und damit ein abgreifbarer Messbereich verändert, die Messbereicheinstellung gemessen und aus dem Ergebnis ein Codesignal gebildet wird.

## Claims

1. Authorization card, consisting of a card body (1, 112, 130, 142) serving as data carrier and a user-adjustable member (2, 118, 131, 144) for generating an information serving for identification and/or authorization check, characterized in that the card body (1, 112, 130, 142) and the adjustable member (2, 118, 131, 144) are formed as parts separable from each other, the adjustable member (2, 118, 131, 144) thereof being re-usable.

2. Authorization card according to claim 1, characterized in that the member (2, 118, 131, 144) is formed as an element mountable on the card body (1, 112, 130, 142) and having at least one slideable element (3, 4; 33, 34, 35, 36; 120, 118; 144), the position thereof being detectable for identification.

3. Authorization card according to claim 1 or 2, characterized in that an identification zone comprising a characterizing information and having a detection track (124, 117') is provided and that the member (112, 142) comprises and adjustable element projecting into the detection track (124, 117'), the adjustment position thereof providing different informations when detected.

4. Authorization card according to claim 3, characterized in that the element (118, 144) comprises a surface and/or three-dimensional pattern providing different informations in the possible adjustment positions of the zone.

5. Authorization card according to any of claims 1 to 4, characterized in that the member is formed as a circular disk (118) being rotatably adjustable around its axis or as plate (131, 144) being slideable along a linear path.

6. Authorization card according to claim 4 or 5, characterized in that the member (118, 144) is mounted to a frame receiving the authorization card (112, 142).

7. Authorization card according to one of the previous claims, characterized in that the member (2, 118, 131, 144) comprises a tappet (128) for resetting into a defined neutral position.

8. Authorization card according to one of the claims 1 to 7, characterized in that the member (2, 118, 131, 144) comprises an adjustment marking or adjustment scale, respectively, and the variation attainable by the adjustment is related to the adjustment scale in a non-linear and unique manner.

9. Method for checking the autorization for an authorization card, characterized in that a code is adjusted on the authorization card and a detectable measuring zone is varied thereby, the adjustment of the measuring zone is measured and a code signal is formed of the result.

## Revendications

1. Carte d'autorisation formée d'un corps de carte (1, 112, 130, 142) servant de support de données et d'un élément (2, 118, 131, 144) réglable par l'usager et servant à engendrer une information servant à l'identification et/ou à la vérification d'autorisation, caractérisée par le fait que le corps de carte (1, 112, 130, 142) et l'élément réglable (2, 118, 131, 144) sont constitués sous la forme de parties séparables l'une de l'autre, dont l'élément réglable (2, 118, 131, 144) est réutilisable.

2. Carte d'autorisation selon la revendication 1, caractérisée par le fait que l'élément (2, 118, 131, 144) est constitué sous la forme d'une partie pouvant se poser sur le corps de carte (1, 112, 130, 142) et comportant au moins une partie coulissante (3, 4; 33, 34, 35, 36; 120; 118; 144) dont la position peut être explorée pour l'identification.

3. Carte d'autorisation selon l'une des revendications 1 et 2, caractérisée par le fait qu'il est prévu une région d'étiquette présentant une information de caractérisation et munie d'une piste d'exploration (124, 117') et que l'élément (112, 142) présente une partie réglable (118, 144) pénétrant dans la piste d'exploration (124, 117') et dont la position de réglage fournit, lors de l'exploration, différentes informations.

4. Carte d'autorisation selon la revendication 3, caractérisée par le fait que la partie (118, 144) présente une configuration plate et/ou plastique qui fournit, dans les positions de réglage possibiles de la région, différentes informations.

5. Carte d'autorisation selon l'une des revendications 1 à 4 caractérisée par le fait que l'élément est constitué sous la forme d'un disque rond (118) qui peut être réglé par rotation autour de son axe ou d'une plaque (131, 144) pouvant coulisser de façon linéaire le long d'une voie.

6. Carte d'autorisation selon l'une des revendications 4 et 5, caractérisée par le fait que l'élément (118, 144) est fixé à un cadre recevant la carte d'autorisation (112, 142).

7. Carte d'autorisation selon l'une des revendications précédentes, caractérisée par le fait que l'élément (2, 118, 131, 144) présente un entraîneur (128) pour le rappel à une position zéro définie.

8. Carte d'autorisation selon l'une des revendications 1 à 7, caractérisée par le fait que l'élément (2, 118, 131, 144) présente un marquage de réglage ou une échelle de réglage et que la variation qui peut être obtenue par le réglage est liée de façon non linéaire et univoque à l'échelle de réglage.

9. Procédé de verification d'autorisation pour carte d'autorisation, caractérisé par le fait que l'on établit un mot caractéristique sur la carte d'autorisation et qu'ainsi on modifie une étendue de mesure pouvant être prélévée, que l'on mesure le réglage de l'étendue de mesure et qu'en partant du résultat, on forme un signal codé.

FIG.1                                      FIG. 1a

FIG. 8

0 034 755

FIG. 3   FIG. 2

0 034 755

0 034 755

FIG. 4

FIG. 5

13

FIG. 7

FIG. 6

0 034 755

**FIG. 9**

**FIG. 10**

FIG. 11

118    118    124

117

FIG. 12

115    118a    118a    118a    115

117

112

115    115

131    XVI    131    FIG. 13    FIG. 14

131

124

132    132    132

130    XVI    117    130    117

FIG.15

FIG.16

FIG.17